# EUROPEAN PATENT SPECIFICATION

(11) **EP 4 472 188 B1**
(45) Date of publication and mention of the grant of the patent: **28.10.2026**
(21) Application number: 22923883.7
(22) Date of filing: 28.01.2022
(51) Int. Cl.: G06T 7/269, H04N 25/47, G01C 21/16

(54) **ELECTRONIC DEVICE, INFORMATION PROCESSING METHOD, AND PROGRAM**
ELEKTRONISCHE VORRICHTUNG, INFORMATIONSVERARBEITUNGSVERFAHREN UND PROGRAMM
DISPOSITIF ÉLECTRONIQUE, PROCÉDÉ DE TRAITEMENT D'INFORMATIONS ET PROGRAMME

(43) Date of publication of application: 04.12.2024
(73) Proprietor: Sony Interactive Entertainment Inc., Tokyo 108-0075 (JP)
(72) Inventor: NAGANUMA Hiromasa, Tokyo 108-0075 (JP); HAYASHI Masakazu, Tokyo 108-0075 (JP); EGAWA Naoki, Tokyo 108-0075 (JP)
(74) Representative: Gill Jennings & Every LLP
(86) International application number: PCT/JP2022/003405
(87) International publication number: WO 2023/145019

(56) References cited:
- WO-A1-2020/110659
- WO-A1-2020/163663
- CN-A- 110 296 717
- JP-A- 2020 057 990
- JP-A- 2020 091 163
- JP-A- 2020 091 163
- US-A1- 2020 404 177
- ELMAR MAIR ET AL: "Spatio-temporal initialization for IMU to camera registration", ROBOTICS AND BIOMIMETICS (ROBIO), 2011 IEEE INTERNATIONAL CONFERENCE ON, IEEE, 7 December 2011 (2011-12-07), pages 557 - 564, XP032165843, ISBN: 978-1-4577-2136-6, DOI: 10.1109/ROBIO.2011.6181345
- ANTONI ROSINOL VIDAL ET AL: "Ultimate SLAM? Combining Events, Images, and IMU for Robust Visual SLAM in HDR and High Speed Scenarios", ARXIV.ORG, CORNELL UNIVERSITY LIBRARY, 201 OLIN LIBRARY CORNELL UNIVERSITY ITHACA, NY 14853, 19 September 2017 (2017-09-19), XP081307192, DOI: 10.1109/LRA.2018.2793357
- DELBRUCK T ET AL: "Integration of dynamic vision sensor with inertial measurement unit for electronically stabilized event-based vision", 2014 IEEE INTERNATIONAL SYMPOSIUM ON CIRCUITS AND SYSTEMS (ISCAS), IEEE, 1 June 2014 (2014-06-01), pages 2636 - 2639, XP032624761, DOI: 10.1109/ISCAS.2014.6865714
- AERTS PETER ET AL: "Time Synchronisation of Low-cost Camera Images with IMU Data based on Similar Motion :", PROCEEDINGS OF THE 16TH INTERNATIONAL CONFERENCE ON INFORMATICS IN CONTROL, AUTOMATION AND ROBOTICS, 29 July 2019 (2019-07-29), pages 292 - 299, XP093326772, ISBN: 978-989-758-380-3, DOI: 10.5220/0007837602920299

## Description

### [Technical Field]

The present invention relates to an electronic device, an information processing method, and a program.

### [Background Art]

There are known event-driven vision sensors in which pixels having detected changes in the intensity of incident light generate signals in a time-asynchronous manner. Event-driven vision sensors have an advantage of being able to operate with low power and at high speed compared to frame-type vision sensors that scan all pixels at predetermined intervals, specifically image sensors such as a charge coupled device (CCD) and a complementary metal oxide semiconductor (CMOS). Techniques related to such event-driven vision sensors are described in PTL 1 and PTL 2, for example.

Further related prior art is disclosed in JP 2020 091163 A.

### [Citation List]

### [Patent Literature]

[PTL 1]
   Japanese Translations of PCT for Patent No. 2014-535098
[PTL 2]
   Japanese Patent Laid-open No. 2018-85725

### [Summary]

### [Technical Problem]

However, although the above-mentioned advantage of event-driven vision sensors are known, it is hard to say that peripheral technologies for which characteristics different from those of conventional vision sensors, such as frame-type vision sensors, are taken into account have been sufficiently proposed.

Therefore, an object of the present invention is to provide an electronic device, an information processing method, and a program that make it possible to generate useful information by use of an event-driven vision sensor and an inertial measurement unit (IMU).

### [Solution to Problem]

According to one aspect of the present invention, there is provided an electronic device including a vision sensor that is of an event-driven type and includes a sensor array having a sensor that generates an event signal when detecting a change in an intensity of incident light, an IMU whose positional relation with the vision sensor is known and which measures at least one physical quantity, and an additional information generating section that generates additional information related to the event signal or an output value of the IMU by associating flow information detected on the basis of the event signal with a flow pattern associated in advance with the at least one physical quantity or an estimated value based on the at least one physical quantity.

According to another aspect of the present invention, there is provided an information processing method including a step of generating additional information related to an event signal or an output value of an IMU by associating flow information detected on the basis of the event signal received from a vision sensor that is of an event-driven type and includes a sensor array having a sensor that generates the event signal when detecting a change in an intensity of incident light with a flow pattern associated in advance with at least one physical quantity measured by the IMU whose positional relation with the vision sensor is known or an estimated value based on the at least one physical quantity.

According to still another aspect of the present invention, there is provided a program that causes a computer to implement a function of generating additional information related to an event signal or an output value of an IMU by associating flow information detected on the basis of the event signal received from a vision sensor that is of an event-driven type and includes a sensor array having a sensor that generates the event signal when detecting a change in an intensity of incident light with a flow pattern associated in advance with at least one physical quantity measured by the IMU whose positional relation with the vision sensor is known or an estimated value based on the at least one physical quantity.

### [Brief Description of Drawings]

[FIG. 1]

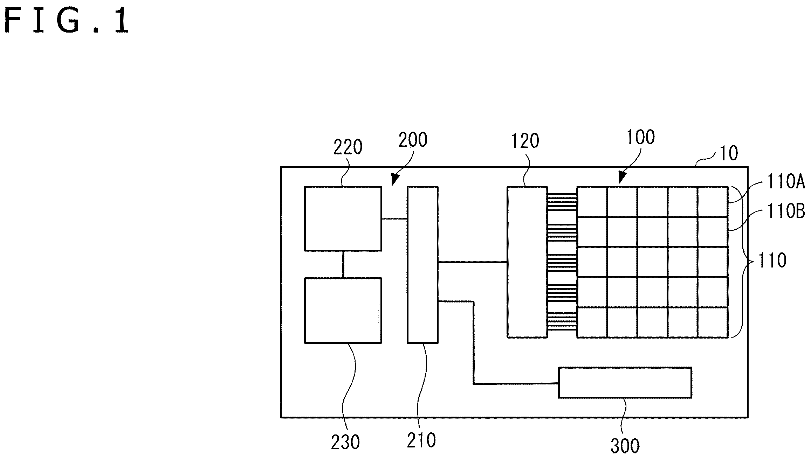

   FIG. 1 is a block diagram illustrating a schematic configuration of an electronic device according to a first embodiment of the present invention.
[FIG. 2]

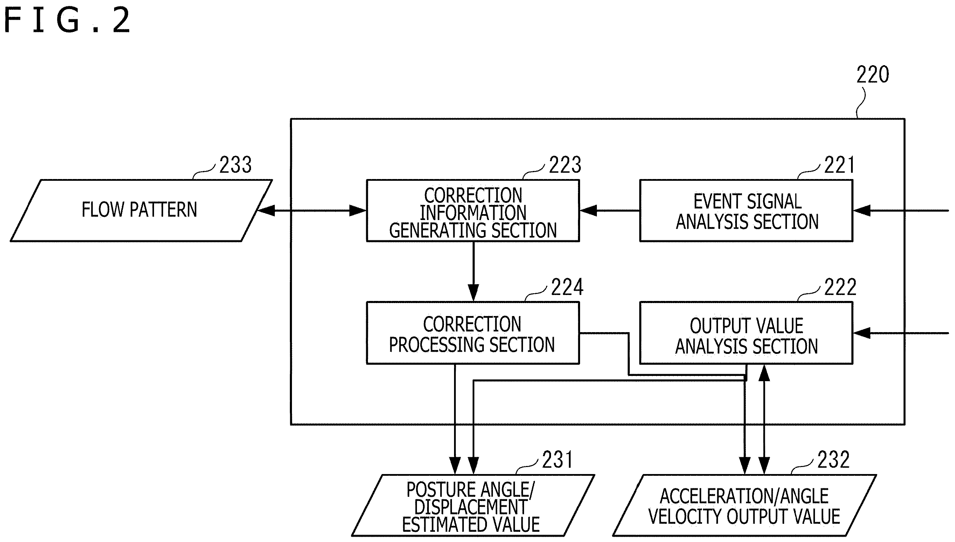

   FIG. 2 is a block diagram illustrating a functional configuration of a processing circuit in the electronic device illustrated in FIG. 1.
[FIG. 3]

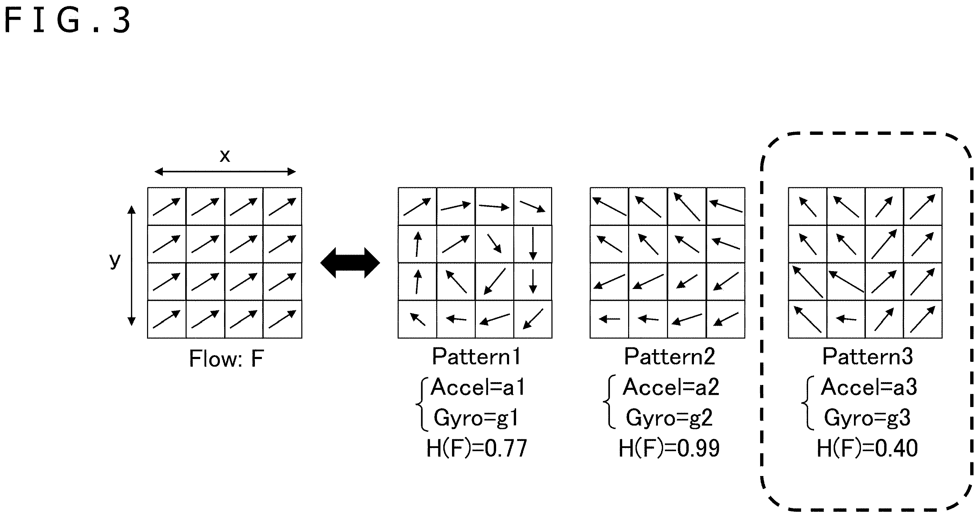

   FIG. 3 is a diagram illustrating an example of association between flow information and a flow pattern in the first embodiment of the present invention.
[FIG. 4]

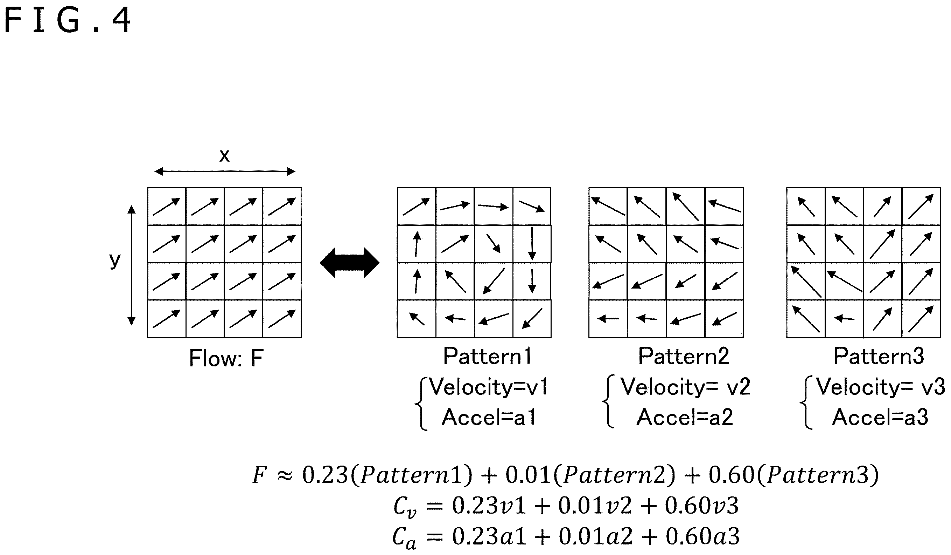

   FIG. 4 is a diagram illustrating an example of association between flow information and a flow pattern in a second embodiment of the present invention.
[FIG. 5]

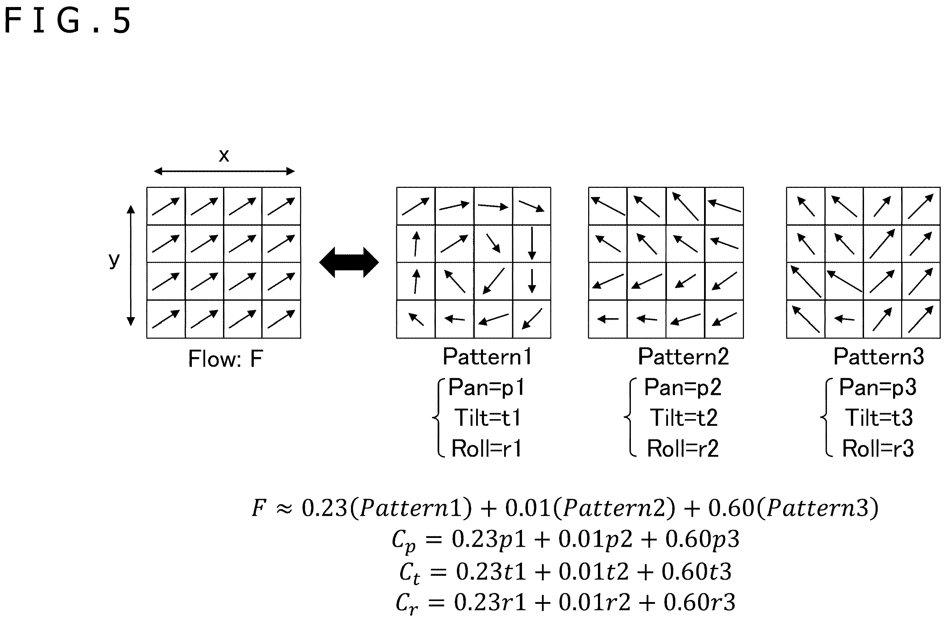

   FIG. 5 is a diagram illustrating an example of association between flow information and a flow pattern in the second embodiment of the present invention.
[FIG. 6]

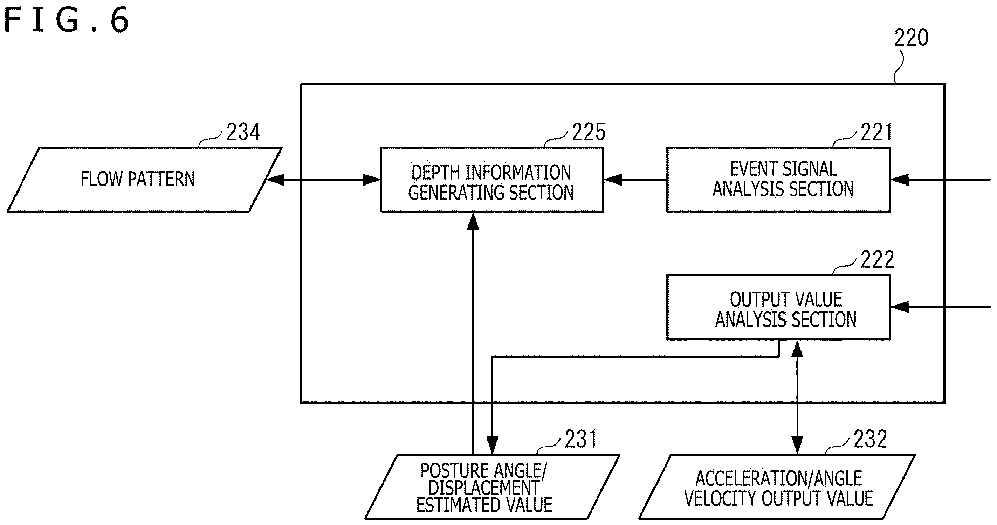

   FIG. 6 is a block diagram illustrating a functional configuration of a processing circuit in an electronic device according to a third embodiment of the present invention.
[FIG. 7]

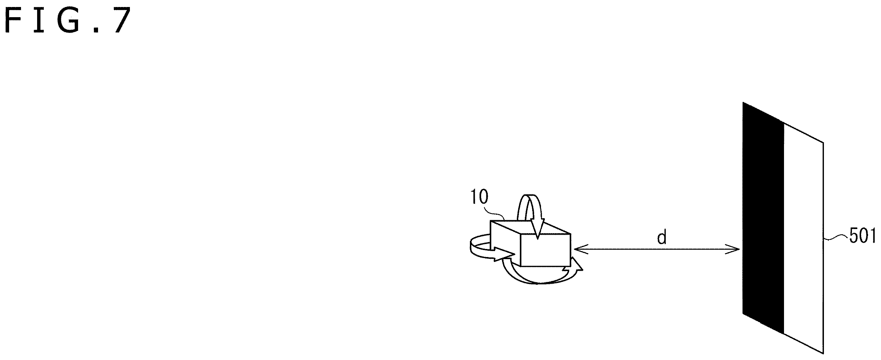

   FIG. 7 is a diagram illustrating an example of a flow pattern generation method in the third embodiment of the present invention.
[FIG. 8]

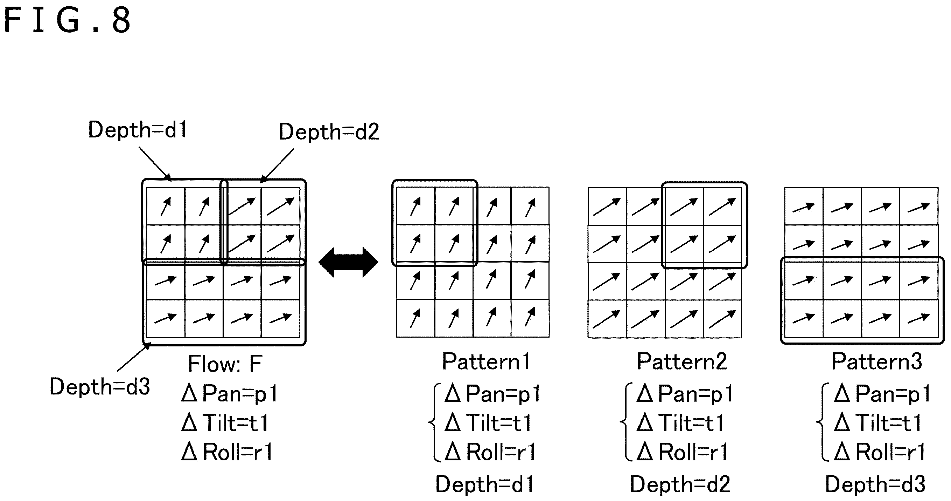

   FIG. 8 is a diagram illustrating an example of association between flow information and a flow pattern in the third embodiment of the present invention.

### [Description of Embodiments]

Hereinafter, some embodiments of the present invention will be described in detail with reference to the accompanying drawings. Note that, in the present description and the drawings, components having substantially the same functional configuration are designated by the same reference signs and redundant description will be omitted.

### (First embodiment)

FIG. 1 is a block diagram illustrating a schematic configuration of an electronic device according to a first embodiment of the present invention. As illustrated in FIG. 1, an electronic device 10 includes a vision sensor 100, a control unit 200, and an IMU 300.

The event-driven vision sensor 100 includes a sensor array 110 having sensors 110A, 110B, ... corresponding to pixels of an image, and a processing circuit 120 connected to the sensor array 110. The sensors 110A, 110B, ... include light receiving elements, and generate event signals when detecting a change in the intensity of incident light, more specifically, a change in brightness. The event signal is output from the processing circuit 120 as information indicating, for example, a time stamp, sensor identification information (the pixel position, for example), and the polarity of the brightness change (increase or decrease). When a subject moves within the angle of view of the sensor array 110, the intensity of light reflected or scattered by the subject changes, and therefore, the movement of the subject can be detected in chronological order by event signals generated by the sensors 110A, 110B, ... corresponding to the edge of the subject, for example.

The control unit 200 includes a communication interface 210, a processing circuit 220, and a memory 230. The communication interface 210 receives event signals transmitted from the processing circuit 120 of the vision sensor 100 and output values such as acceleration and angular velocity transmitted from the IMU 300, and outputs these to the processing circuit 220. The processing circuit 220 operates according to a program stored in the memory 230, for example, and processes the received event signal and output value. For example, on the basis of the event signal, the processing circuit 220 generates, in time series, an image in which the position where the brightness change has occurred is mapped, and temporarily or continuously stores the image in the memory 230 or further transmits the image to another device via the communication interface 210. Further, for example, the processing circuit 220 estimates the posture angle and displacement of the electronic device 10 by integrating the acceleration and angular velocity obtained as the output value of the IMU 300.

The IMU 300 measures at least one physical quantity. To be more specific, the IMU 300 includes a gyro sensor and an acceleration sensor, and detects the angular velocity and acceleration generated in the electronic device 10, for example. The angular velocity and acceleration are examples of physical quantities. Here, the positional relation between the IMU 300 and the vision sensor 100 is known. To be specific, for example, the posture angle and displacement estimated on the basis of the output value of the IMU 300 can be considered to be the same as the posture angle and displacement of the vision sensor 100, or can be converted into the posture angle and displacement of the vision sensor 100 by geometric calculation. When displacement or rotation occurs in the electronic device 10, the IMU 300 detects angular velocity and acceleration, and since the positional relation between the sensors 110A, 110B, ... and the subject changes, the sensors 110A, 110B, ... corresponding to the edge of the subject generates an event signal, for example. That is, when displacement or rotation occurs in the electronic device 10, the vision sensor 100 also generates an event signal that reflects the displacement or rotation.

FIG. 2 is a block diagram illustrating a functional configuration of a processing circuit in the electronic device illustrated in FIG. 1. In the example illustrated in FIG. 2, the processing circuit 220 of the control unit 200 includes an event signal analysis section 221, an output value analysis section 222, a correction information generating section 223, and a correction processing section 224 as functions implemented by the operation according to a program stored in the memory 230, for example. The functions of each section will be described below.

The event signal analysis section 221 analyzes an event signal received from the vision sensor 100 via the communication interface 210. To be specific, for example, the event signal analysis section 221 detects flow information indicating the movement of the subject, by mapping time-series brightness changes indicated by the event signal. Here, the flow information is obtained by representing, by use of vectors, the movement of the subject in each area made by segmenting the pixel area in accordance with a predetermined rule, for example. Although there are no particular limitations regarding the shape or size of the segmented area in which flow information is generated, in the following description, flow information generated in a grid-shaped segmented area containing a predetermined number of pixels in two directions, x and y, may be illustrated.

The output value analysis section 222 analyzes output values such as acceleration and angular velocity received from the IMU 300 via the communication interface 210. To be specific, for example, the output value analysis section 222 calculates the estimated value of the displacement of the electronic device 10 by integrating the acceleration obtained as the output value of the IMU 300. Further, the output value analysis section 222 calculates the estimated value of the posture angle of the electronic device 10 by integrating the angular velocity obtained as the output value of the IMU 300. The calculated estimated values 231 of the displacement and posture angle of the electronic device 10 are stored in the memory 230. Output values 232 of acceleration and angular velocity received from IMU 300 may also be stored in the memory 230.

By associating the flow information detected by the event signal analysis section 221 with a flow pattern 233 prepared in advance, the correction information generating section 223 generates correction information concerning the acceleration and angular velocity in the output values 232 of the IMU 300 acquired in synchronization with the flow information. The flow pattern 233 is stored in the memory 230, for example. It should be noted that, in the following description, the output value 232 acquired in synchronization with flow information means an output value 232 having a time stamp that at least partially corresponds to the event signal on which the flow information is based, for example, and does not necessarily mean that the time when the flow information is detected and the time when the output value 232 is acquired completely match. In the present embodiment, the correction information generating section 223 extracts a flow pattern that matches the flow information as in the example described below, and generates the correction information on the basis of the physical quantities associated with the extracted flow pattern, specifically, acceleration and angular velocity.

In the example illustrated in FIG. 3, in the flow pattern 233, acceleration (Accel) and angular velocity (Gyro) are associated with the flow pattern on the basis of the results of measurements performed in advance. To be more specific, the flow pattern 233 is generated by, for example, causing displacement and rotation to occur in the electronic device 10 with known acceleration and angular velocity and detecting flow information from an event signal generated by the vision sensor 100 at that time. In a case where the flow information detected by the event signal analysis section 221 matches any of the flow patterns 233, the correction information generating section 223 generates the correction information concerning the acceleration and angular velocity on the basis of the difference between the acceleration and angular velocity associated with the flow pattern 233 and the acceleration and angular velocity in the output value 232. The correction processing section 224 corrects the acceleration and angular velocity in the output value 232 according to the generated correction information.

Here, as in the example illustrated in FIG. 3, whether the flow information F matches the flow pattern 233 may be determined by use of the cost function H(F). In this example, the cost function H(F) indicates the magnitude of the difference between the flow information F and each flow pattern, and the flow pattern with the smaller cost function H(F) is selected. The correction amount of acceleration and angular velocity in the correction information may be set in such a manner as to cause the acceleration and angular velocity in the output value 232 to approach the acceleration and angular velocity associated with the flow pattern 233, at a rate according to the value of the cost function H(F) in the selected flow pattern, for example. In this case, as the value of cost function H(F) becomes smaller, the acceleration and angular velocity in the output value 232 become closer to the acceleration and angular velocity associated with the flow pattern 233.

According to the configuration of the first embodiment of the present invention as described above, by associating in advance the acceleration and angular velocity of the electronic device 10 with the flow information detected from the event signal of the vision sensor 100, the acceleration and angular velocity in the output value of IMU 300 can be corrected on the basis of the flow information to improve accuracy. The correction information concerning the acceleration and angular velocity is an example of additional information related to the output value of the IMU 300, and the correction information generating section 223 is an example of an additional information generating section that generates additional information by associating the flow information detected on the basis of the event signal with the flow pattern.

### (Second embodiment)

Next, a second embodiment of the present invention will be described. In the present embodiment as well, the functional configurations of the electronic device and the processing circuit are similar to those in the first embodiment. As a difference from the first embodiment, in the present embodiment, the amount of change in velocity, acceleration, or posture angle is associated with the flow information pattern in the flow pattern 233, and the correction information generating section 223 associates the flow information with the flow pattern 233 by using a method different from that in the first embodiment, as in the examples illustrated in FIGS. 4 and 5. In other respects, the configuration of the present embodiment is similar to that of the first embodiment described above, so that a redundant detailed description is omitted.

FIG. 4 illustrates examples of flow patterns associated with velocity (Velocity) and acceleration (Accel), and FIG. 5 illustrates an example of flow patterns (Pattern1 to Pattern3) associated with amounts of change of the posture angles (Pan, Tilt, Roll). In the present embodiment, when the electronic device 10 is subjected to displacement with known velocity and acceleration, or rotation with known angular velocity, for example, the flow patterns 233 are generated by detection of flow information from an event signal generated by the vision sensor 100. Incidentally, the velocity and acceleration correction values can be used as correction values when the output value analysis section 222 calculates the estimated value of displacement of the electronic device 10. Further, the posture angle correction value can be used as a correction value when the output value analysis section 222 calculates the estimated value of the posture angle of the electronic device 10.

In the present embodiment, the correction information generating section 223 generates correction information concerning velocity, acceleration, or a posture angle on the basis of the contribution rate of each flow pattern 233 in a case where the flow information F detected by the event signal analysis section 221 is broken down into components of a plurality of flow patterns 233 as in the above example. To be specific, the correction information generating section 223 generates the correction information by adding up the velocity, acceleration, or posture angles respectively associated with the plurality of flow patterns 233, according to the contribution rate of each flow pattern. For example, in the example of FIG. 4, a velocity correction value Cᵥ and an acceleration correction value Cₐ are calculated as the sum obtained by multiplying velocity v1, velocity v2, and velocity v3 and acceleration a1, acceleration a2, and acceleration a3 associated with the flow patterns by coefficients corresponding to the contribution rates, respectively. Similarly, in the example of FIG. 5, correction values Cₚ, Cₜ, and Cᵣ for the posture angles in respective directions are calculated as the sum obtained by multiplying the posture angles associated with the flow patterns by coefficients corresponding to the contribution rates, respectively. Note that, strictly speaking, what is detected from the flow information F is the amount of change in the posture angle, but, for example, if the time point when the electronic device 10 is determined to be at a standstill, on the basis of the flow signal F, is used as a reference point, the correction value of the posture angle can be calculated by comparing the amount of change in the posture angle detected from the flow information F between the reference points with the amount of change in the posture angle measured by the IMU 300.

According to the configuration of the second embodiment of the present invention as described above, by associating in advance the velocity, acceleration, or posture angle of the electronic device 10 with the flow information detected from the event signal of the vision sensor 100, the posture angle and displacement in the estimated value based on the output value of IMU 300 can be corrected on the basis of the flow information, and accuracy can be improved. The correction information concerning the estimated value of the posture angle and displacement is an example of additional information related to the output value of the IMU 300, and the correction information generating section 223 is an example of an additional information generating section that generates additional information by associating the flow information detected on the basis of the event signal with the flow pattern.

In the second embodiment described above, correction information is generated by adding up values associated with a plurality of flow patterns, according to the contribution rates, and therefore, valid correction information can be generated even in a case where there is no flow pattern with the value of the cost function (H) sufficiently small in the first embodiment, for example. In the case of the first embodiment, as there are more flow patterns to be compared, the possibility of selecting a valid flow pattern becomes higher, but in cases where it is difficult to prepare flow patterns that cover all cases because there are many variations in the movement and environmental conditions of the electronic device 10, for example, the configuration of the second embodiment may be effective.

### (Third embodiment)

FIG. 6 is a block diagram illustrating a functional configuration of a processing circuit in an electronic device according to a third embodiment of the present invention. In the example illustrated in FIG. 6, the processing circuit 220 of the control unit 200 includes the event signal analysis section 221, the output value analysis section 222, and a depth information generating section 225 as functions implemented by operation according to a program stored in the memory 230, for example. Incidentally, the configuration of the present embodiment other than that of the depth information generating section 225 is similar to that of the first embodiment described above, and therefore, redundant detailed description will be omitted.

The depth information generating section 225 generates depth information concerning the subject of the vision sensor 100 by associating a flow pattern 234 with the flow information detected by the event signal analysis section 221 and the amount of change in the posture angle of the electronic device 10 based on the output value of the IMU 300 acquired in synchronization with the flow information. In the flow pattern 234, the amount of change in the posture angle and the depth of the subject are associated with the flow pattern on the basis of the results of measurements performed in advance. To be more specific, at the time of causing the electronic device 10 to change its posture angle in a state where a depth d of a subject 501 is known, as in the example illustrated in FIG. 7, the flow pattern 234 is generated by detecting flow information from event signals generated in the vision sensor 100. By detecting flow information while keeping the depth d and causing change in the posture angle with various amounts of change, and further detecting flow information in a similar way while changing the depth d, the flow pattern 234 that can specify the depth d by using the amount of change in the posture angle and the pattern of the flow information as a key can be obtained.

In the present embodiment, the depth information generating section 225 extracts the flow patterns 234 corresponding to the amount of change in the posture angle based on the output value of the IMU 300 acquired in synchronization with the flow information, and identifies patterns which the flow information at least partially matches in the extracted flow patterns 234. In the example illustrated in FIG. 8, flow patterns (Pattern1 to Pattern3) corresponding to the amount of change in the posture angle (ΔPan, ΔTilt, ΔRoll) estimated from the output value of the IMU 300 are extracted, and a pattern matching each of areas obtained by segmenting the flow information F is identified. In the illustrated example, pattern1 (depth d1) is identified in the upper left part of the pixel area, pattern2 (depth d2) is identified in the upper right part of the pixel area, and pattern3 (depth d3) is identified in the lower part of the pixel area as respectively matching patterns. The depth information generating section 225 generates depth information that specifies the depth of the subject in each part of the pixel area, on the basis of the depths d1 to d3 of the subject respectively associated with these flow patterns.

According to the configuration of the third embodiment of the present invention as described above, by associating the depth d of the subject with the flow information in advance for each amount of change in the posture angle of the electronic device 10, the depth information concerning the subject of the event signal can be generated. Note that, since the flow information changes under the influence of both the depth d of the subject and the amount of change in the posture angle of the electronic device 10, the depth of the subject can be more appropriately determined by use of the amount of change in the posture angle estimated from the output value of the IMU 300. The depth information that specifies the depth of a subject is an example of additional information related to an event signal, and the depth information generating section 225 is an example of an additional information generating section that generates additional information by associating flow information detected on the basis of the event signal with the flow pattern.

Although several embodiments of the present invention have been described above in detail with reference to the accompanying drawings, the present invention is not limited to such examples. It is clear that a person with ordinary knowledge in the technical field to which the present invention pertains can come up with various examples of changes or modifications within the scope of the technical idea described in the claims, and it is understood that these also fall within the technical scope of the present invention.

### [Reference Signs List]

- 10:: Electronic device
- 100:: Vision sensor
- 110:: Sensor array
- 110A:: Sensor
- 110B:: Sensor
- 120:: Processing circuit
- 200:: Control unit
- 210:: Communication interface
- 220:: Processing circuit
- 221:: Event signal analysis section
- 222:: Output value analysis section
- 223:: Correction information generating section
- 224:: Correction processing section
- 225:: Depth information generating section
- 230:: Memory
- 231:: Estimated value
- 232:: Output value
- 233:: Flow pattern
- 234:: Flow pattern
- 501:: Subject

## Claims

1. An electronic device comprising:
a vision sensor (100) that is of an event-driven type and includes a sensor array (110) having a sensor that generates an event signal when detecting a change in an intensity of incident light;
an inertial measurement unit (300) whose positional relation with the vision sensor is known and which measures at least one physical quantity; and
an additional information generating section (223) that generates additional information related to the event signal or an output value of the inertial measurement unit by associating flow information detected on a basis of the event signal with a flow pattern associated in advance with the at least one physical quantity or an estimated value based on the at least one physical quantity.

2. The electronic device according to claim 1, wherein
the additional information includes correction information for the output value acquired in synchronization with the flow information or the estimated value based on the output value.

3. The electronic device according to claim 2, wherein
the additional information generating section extracts the flow pattern that matches the flow information, and generates the correction information on a basis of the at least one physical quantity associated with the extracted flow pattern or the estimated value based on the at least one physical quantity.

4. The electronic device according to claim 2, wherein
the flow pattern includes first and second flow patterns, and
the additional information generating section generates the correction information by adding up the at least one physical quantity associated with each of the first and second flow patterns or the estimated value based on the at least one physical quantity according to contribution rates of the first and second flow patterns when the flow information is broken down into the first and second flow patterns as components.

5. The electronic device according to any one of claims 1 to 4, wherein
the additional information includes depth information concerning a subject of the vision sensor,
the flow pattern is associated with a depth of the subject in addition to the at least one physical quantity or the estimated value based on the at least one physical quantity, and
the additional information generating section extracts the flow pattern corresponding to the output value acquired in synchronization with the flow information or the estimated value based on the output value, and generates the depth information on a basis of the depth of the subject associated with a flow pattern which the flow information at least partially matches in the extracted flow pattern.

6. A computer-implemented information processing method comprising:
a step of generating additional information related to an event signal or an output value of an inertial measurement unit by associating flow information detected on a basis of the event signal received from a vision sensor that is of an event-driven type and includes a sensor array having a sensor that generates the event signal when detecting a change in an intensity of incident light with a flow pattern associated in advance with at least one physical quantity measured by the inertial measurement unit whose positional relation with the vision sensor is known or an estimated value based on the at least one physical quantity.

7. A program that causes a computer to implement:
a function of generating additional information related to an event signal or an output value of an inertial measurement unit by associating flow information detected on a basis of the event signal received from a vision sensor that is of an event-driven type and includes a sensor array having a sensor that generates the event signal when detecting a change in an intensity of incident light with a flow pattern associated in advance with at least one physical quantity measured by the inertial measurement unit whose positional relation with the vision sensor is known or an estimated value based on the at least one physical quantity.

## Patentansprüche

1. Elektronische Vorrichtung, umfassend:
einen Vision-Sensor (100), der von einer ereignisgesteuerten Art ist und eine Sensoranordnung (110) einschließt, die einen Sensor aufweist, der ein Ereignissignal erzeugt, wenn eine Änderung einer Intensität von einfallendem Licht erkannt wird;
eine inertiale Messeinheit (300), deren Positionsbeziehung zu dem Vision-Sensor bekannt ist und die mindestens eine physikalische Größe misst; und
einen Zusatzinformationserzeugungsabschnitt (223), der zusätzliche Informationen, die sich auf das Ereignissignal oder einen Ausgabewert der inertialen Messeinheit beziehen, durch ein Verknüpfen von Fließinformationen, die auf einer Basis des Ereignissignals erkannt werden, mit einem Fließmuster, das im Voraus mit der mindestens einen physikalischen Größe oder einem Schätzwert basierend auf der mindestens einen physikalischen Größe verknüpft ist, erzeugt.

2. Elektronische Vorrichtung nach Anspruch 1, wobei
die zusätzlichen Informationen Korrekturinformationen für den Ausgabewert, die synchron mit den Fließinformationen erfasst werden, oder den Schätzwert basierend auf dem Ausgabewert einschließen.

3. Elektronische Vorrichtung nach Anspruch 2, wobei
der Zusatzinformationserzeugungsabschnitt das Fließmuster extrahiert, das mit den Fließinformationen übereinstimmt, und
die Korrekturinformationen auf einer Basis der mindestens einen physikalischen Größe, die mit dem extrahierten Fließmuster verknüpft ist, oder des Schätzwerts basierend auf der mindestens einen physikalischen Größe erzeugt.

4. Elektronische Vorrichtung nach Anspruch 2, wobei
das Fließmuster erste und zweite Fließmuster einschließt und
der Zusatzinformationserzeugungsabschnitt die Korrekturinformationen durch ein Aufsummieren der mindestens einen physikalischen Größe, die mit jedem des ersten und des zweiten Fließmusters verknüpft ist, oder des Schätzwerts basierend auf der mindestens einen physikalischen Größe gemäß Beitragsraten des ersten und des zweiten Fließmusters, wenn die Fließinformationen in das erste und das zweite Fließmuster als Komponenten zerlegt werden, erzeugt.

5. Elektronische Vorrichtung nach einem der Ansprüche 1 bis 4, wobei
die zusätzlichen Informationen Tiefeninformationen bezüglich eines Subjekts des Vision-Sensors einschließen,
das Fließmuster zusätzlich zu der mindestens einen physikalischen Größe oder dem Schätzwert basierend auf der mindestens einen physikalischen Größe mit einer Tiefe des Subjekts verknüpft ist und
der Zusatzinformationserzeugungsabschnitt das Fließmuster, das dem Ausgabewert, der synchron mit den Fließinformationen erfasst wird, oder dem Schätzwert basierend auf dem Ausgabewert entspricht, extrahiert und
die Tiefeninformationen auf einer Basis der Tiefe des Subjekts erzeugt, das mit einem Fließmuster verknüpft ist, mit dem die Fließinformationen in dem extrahierten Fließmuster mindestens teilweise übereinstimmen.

6. Computerimplementiertes Informationsverarbeitungsverfahren, umfassend:
einen Schritt des Erzeugens von zusätzlichen Informationen, die sich auf ein Ereignissignal oder einen Ausgabewert einer inertialen Messeinheit beziehen, durch das Verknüpfen von Fließinformationen, die auf einer Basis des Ereignissignals erkannt werden, das von einem Vision-Sensor empfangen wird, der von einer ereignisgesteuerten Art ist und eine Sensoranordnung einschließt, die einen Sensor aufweist, der das Ereignissignal erzeugt, wenn eine Änderung einer Intensität von einfallendem Licht erkannt wird, mit einem Fließmuster, das im Voraus mit mindestens einer physikalischen Größe, die durch die inertiale Messeinheit gemessen wird, deren Positionsbeziehung zu dem Vision-Sensor bekannt ist, oder einem Schätzwert basierend auf der mindestens einen physikalischen Größe verknüpft ist.

7. Programm, das einen Computer veranlasst, zu implementieren:
eine Funktion zum Erzeugen von zusätzlichen Informationen, die sich auf ein Ereignissignal oder einen Ausgabewert einer inertialen Messeinheit beziehen, durch das Verknüpfen von Fließinformationen, die auf einer Basis des Ereignissignals erkannt werden, das von einem Vision-Sensor empfangen wird, der von einer ereignisgesteuerten Art ist und eine Sensoranordnung einschließt, die einen Sensor aufweist, der das Ereignissignal erzeugt, wenn eine Änderung einer Intensität von einfallendem Licht erkannt wird, mit einem Fließmuster, das im Voraus mit mindestens einer physikalischen Größe, die durch die inertiale Messeinheit gemessen wird, deren Positionsbeziehung zu dem Vision-Sensor bekannt ist, oder einem Schätzwert basierend auf der mindestens einen physikalischen Größe verknüpft ist.

## Revendications

1. Dispositif électronique comprenant :
un capteur de vision (100) qui est d'un type événementiel et comporte un réseau de capteurs (110) ayant un capteur qui génère un signal d'événement lors de la détection d'un changement d'intensité de lumière incidente ;
une unité de mesure inertielle (300) dont la relation de position avec le capteur de vision est connue et qui mesure au moins une grandeur physique ; et
une section de génération d'informations supplémentaires (223) qui génère des informations supplémentaires liées au signal d'événement ou à une valeur de sortie de l'unité de mesure inertielle en associant des informations d'écoulement détectées sur la base du signal d'événement à un modèle d'écoulement associé à l'avance à l'au moins une grandeur physique ou à une valeur estimée basée sur l'au moins une grandeur physique.

2. Dispositif électronique selon la revendication 1, dans lequel
les informations supplémentaires comportent des informations de correction pour la valeur de sortie acquise en synchronisation avec les informations d'écoulement ou la valeur estimée basée sur la valeur de sortie.

3. Dispositif électronique selon la revendication 2, dans lequel
la section de génération d'informations supplémentaires extrait le modèle d'écoulement qui correspond aux informations d'écoulement, et
génère les informations de correction sur la base de l'au moins une grandeur physique associée au modèle d'écoulement extrait ou de la valeur estimée basée sur l'au moins une grandeur physique.

4. Dispositif électronique selon la revendication 2, dans lequel
le modèle d'écoulement comporte des premier et second modèles d'écoulement, et
la section de génération d'informations supplémentaires génère les informations de correction en additionnant l'au moins une grandeur physique associée à chacun des premier et second modèles d'écoulement ou la valeur estimée basée sur l'au moins une grandeur physique en fonction des taux de contribution des premier et second modèles d'écoulement lorsque les informations d'écoulement sont décomposées en les premier et second modèles d'écoulement en tant que composantes.

5. Dispositif électronique selon l'une quelconque des revendications 1 à 4, dans lequel
les informations supplémentaires comportent des informations de profondeur concernant un sujet du capteur de vision,
le modèle d'écoulement est associé à une profondeur du sujet en plus de l'au moins une grandeur physique ou de la valeur estimée basée sur l'au moins une grandeur physique, et
la section de génération d'informations supplémentaires extrait le modèle d'écoulement correspondant à la valeur de sortie acquise en synchronisation avec les informations d'écoulement ou à la valeur estimée basée sur la valeur de sortie, et
génère les informations de profondeur sur la base de la profondeur du sujet associé à un modèle d'écoulement auquel les informations d'écoulement correspondent au moins partiellement dans le modèle d'écoulement extrait.

6. Procédé de traitement d'informations mis en œuvre par ordinateur comprenant :
une étape de génération d'informations supplémentaires liées à un signal d'événement ou à une valeur de sortie d'une unité de mesure inertielle en associant des informations d'écoulement détectées sur la base du signal d'événement reçu d'un capteur de vision qui est d'un type événementiel et comporte un réseau de capteurs ayant un capteur qui génère le signal d'événement lors de la détection d'un changement d'une intensité de lumière incidente avec un modèle d'écoulement associé à l'avance à au moins une grandeur physique mesurée par l'unité de mesure inertielle dont la relation de position avec le capteur de vision est connue ou une valeur estimée basée sur l'au moins une grandeur physique.

7. Programme amenant un ordinateur à mettre en œuvre :
une fonction de génération d'informations supplémentaires liées à un signal d'événement ou à une valeur de sortie d'une unité de mesure inertielle en associant des informations d'écoulement détectées sur la base du signal d'événement reçu d'un capteur de vision qui est d'un type événementiel et comporte un réseau de capteurs ayant un capteur qui génère le signal événementiel lors de la détection d'un changement d'intensité de lumière incidente avec un modèle d'écoulement associé à l'avance à au moins une grandeur physique mesurée par l'unité de mesure inertielle dont la relation de position avec le capteur de vision est connue ou une valeur estimée basée sur l'au moins une grandeur physique.
